# NEW EUROPEAN PATENT SPECIFICATION

(11) **EP 1 919 974 B2**
(45) Date of publication and mention of the opposition decision: **08.08.2012**
(45) Mention of the grant of the patent: 26.11.2008
(21) Application number: 06789083.0
(22) Date of filing: 01.08.2006
(51) Int. Cl.: C08G 18/61, C08G 18/79, C09D 175/04

(54) **LOW SURFACE ENERGY POLYISOCYANATES AND THEIR USE IN ONE-OR TWO-COMPONENT COATING COMPOSITIONS**
POLYISOCYANATE MIT NIEDRIGER OBERFLÄCHENENERGIE UND IHRE VERWENDUNG IN EIN- ODER ZWEIKOMPONENTIGEN BESCHICHTUNGSZUSAMMENSETZUNGEN
POLYISOCYANATES DE FAIBLE ENERGIE SUPERFICIELLE, ET LEUR UTILISATION DANS DES COMPOSITIONS DE REVETEMENT MONO OU BICOMPOSANT

(30) Priority: 05.08.2005 US 198707
(43) Date of publication of application: 14.05.2008
(73) Proprietor: Bayer MaterialScience LLC, Pittsburgh, PA 15205-9741 (US)
(72) Inventor: ROESLER, Richard, R., Wexford, PA 15090-7583 (US); LOCKHART, Aaron, Pittsburgh, PA 15235 (US); KINNEY, Carol L., Eighty Four, PA 15330-0583 (US); GARRETT, James, Palmyra, VA 22963 (US)
(74) Representative: Marx, Thiemo Patrick
(86) International application number: PCT/US2006/029897
(87) International publication number: WO 2007/019132

(56) References cited:
- EP-A- 1 707 583
- DE-A1- 10 216 896
- DE-A1- 19 503 284
- US-A- 4 590 224
- US-A- 5 574 122
- TEGO JOURNAL vol. 2, 2002, pages 271 - 272

## Description

### BACKGROUND OF THE INVENTION

### Field of the Invention

The present invention is directed to low surface energy polyisocyanates which contain urethane groups and siloxane groups and are prepared by reacting certain polyisocyanate adducts with compounds containing hydroxyl and siloxane groups, and to their use in one- and two-component coating compositions.

### Description of Related Art

Polyurethane coating compositions containing a polyisocyanate component, in either blocked or unblocked form, and an isocyanate-reactive component, generally a high molecular weight polyol, are well known.

Although coatings prepared from these compositions possess many valuable properties, one property, in particular, which needs to be improved is the surface quality. It can be difficult to formulate coating compositions to obtain a coating having a smooth surface as opposed to one containing surface defects such as craters, etc.

It is believed that these difficulties are related to the high surface tension of the two-component coating compositions. Another problem caused by the high surface tension is the difficulty in cleaning the coatings. Regardless of their potential application area, there is a high likelihood that the coatings will be subjected to stains, graffiti, etc.

The incorporation of either fluorine or siloxane groups into polyisocyanates via allophanate groups in order to reduce the surface tension of the polyisocyanates and the surface energy of the resulting polyurethane coatings is disclosed in U.S. Patents 5,541,281; 5,574,122; 5,576,411; 5,646,227; 5,691,439; and 5,747,629. A disadvantage of the polyisocyanates disclosed in these patents is that they are prepared by reacting an excess of monomeric diisocyanates with the compounds containing either fluorine or siloxane groups. After the reaction is terminated the unreacted monomeric diisocyanates must be removed by an expensive thin film distillation process.

In accordance with copending applications, U.S. Serial Nos. 11/096,590 and 11/097,438, these difficulties may be overcome by using polyisocyanate adducts instead of monomeric diisocyanates to prepare the low surface energy polyisocyanates containing allophanate groups and either siloxane groups or fluorine. Both the copending applications and the previously discussed patents disclose that it is necessary for the polyisocyanate mixtures to contain more allophanate groups than urethane groups to avoid obtaining polyisocyanate mixtures that are cloudy or contain gel particles and to avoid obtaining coatings from these polyisocyanate mixtures that are cloudy in appearance.

Accordingly, it is an object of the present invention to provide low surface energy polyisocyanates which contain urethane groups and siloxane groups, can be obtained as a clear solution and can be used to prepare clear coatings. It is an additional object of the present invention to provide polyisocyanates which have reduced surface tension and, thus, are suitable for the production of coatings which have lower surface energies, improved surfaces and improved cleanability and which also possess the other valuable properties of the known polyurethane coatings. It is a final object of the present invention to provide polyisocyanates that attain the preceding objectives and can be prepared by a less complicated urethanization process.

Surprisingly, these objectives may be achieved with the polyisocyanate mixtures according to the present invention which contain urethane groups and siloxane groups and which are prepared from the polyisocyanate adducts described hereinafter.

### SUMMARY OF THE INVENTION

The present invention is directed to a polyisocyanate mixture
i) having a monomeric diisocyanate content of less than 3% by weight,
ii) having a urethane group content of more than 50 equivalent %, based on the total equivalents of urethane and allophanate groups, and
iii) containing siloxane groups (calculated as SiO, MW 44) in an amount of 0.002 to 50% by weight,
wherein the preceding percentages are based on the solids content of the polyisocyanate mixture and wherein the siloxane groups are incorporated by reacting
a) an isocyanate group from a polyisocyanate adduct containing isocyanurate groups and prepared from a monomeric diisocyanate having at least one cycloaliphatic group with
b) a compound containing one or more hydroxyl groups directly attached to a carbon atom and one or more siloxane groups to form urethane groups.

The present invention also relates to the use of this polyisocyanate mixture, optionally in blocked form, as an isocyanate component in one- or two-component coating compositions.

### DETAILED DESCRIPTION OF THE INVENTION

In accordance with the present invention the polyisocyanate mixtures are prepared from polyisocyanate adducts which contain isocyanurate groups and are prepared from monomeric diisocyanates having at least one cycloaliphatic group. These isocyanurate group-containing polyisocyanates may be prepared as set forth in DE-PS 2,616,416, EP-OS 3,765, EP-OS 10,589, EP-OS 47,452 and US-PS 4,288,586. The polyisocyanate adducts containing isocyanurate groups preferably have an average NCO functionality of 3 to 4.5, more preferably 3 to 4, and an NCO content of 5 to 30%, more preferably 10 to 25% and most preferably 15 to 25% by weight.

Suitable monomeric diisocyanates containing a cycloaliphatic group for preparing the polyisocyanate adducts include cyclohexane-1,3- and - 1,4-diisocyanate, 1-isocyanato-3-isocyanatomethyl-3,5,5-trimethylcyclohexane (isophorone diisocyanate or IPDI), bis-(4-isocyanatocyclohexyl)-methane, 2,4'-dicyclohexyl-methane diisocyanate, 1,3- and 1,4-bis-(isocyanatomethyl)-cyclohexane, bis-(4-isocyanato-3-methyl-cyclohexyl)-methane, 1-isocyanato-1-methyl-4(3)-isocyanatomethyl cyclohexane, 2,4- and/or 2,6-hexahydrotoluylene diisocyanate and mixtures thereof. Especially preferred is isophorone diisocyanate.

Suitable compounds containing hydroxyl groups and siloxane groups, which are suitable for preparing the polyisocyanate mixtures according to the invention, are those containing one or more (preferably one or two and more preferably one) hydroxyl groups directly attached to carbon atoms, and one or more siloxane groups, preferably in the form of dimethyl siloxane groups, -Si(CH₃)₂O-.

Examples of these compounds are those corresponding to the formula

HO-R¹-X-[Si(R²)₂O-]ₙ-[Si(R²)₂-X]ₘ-R¹-Y

wherein
- R¹: represents an optionally inertly substituted, divalent hydrocarbon radical, preferably an alkylene radical (such as methylene, ethylene, propylene or butylene) or a polyoxyalkylene group (such as a polyoxyethylene or polyoxypropylene group),
- R²: represents hydrogen or an optionally inertly substituted lower alkyl, phenyl or benzyl group, preferably methyl or ethyl and more preferably methyl,
- X: represents a linkage between an R¹ group and a Si atom, e.g., a covalent bond, -O- or -COO-,
- Y: represents hydrogen or OH,
- m: is 0 or 1 and is an integer from 1 to 1,000, preferably 2 to 100 and more preferably 4 to 15.

Inert substituents are those that do not interfere with the reaction of the siloxane compound with the polyisocyanate or the urethanization reaction of the isocyanate groups. Examples include halogen atoms such as fluorine.

Examples of compounds containing one isocyanate-reactive group in which R¹ represents an oxyalkylene group are compounds corresponding to the formula

HO-(CHR³-CH₂O-)ₒ-(R⁴)ₘ-[Si(R²)₂O-]ₙ-[Si(R²)₂-X']ₘ-R⁴-H

and examples of compounds containing more than one isocyanate-reactive group in which R¹ represents an oxyalkylene group are compounds corresponding to the formula

HO-(CHR³-CH₂O-)ₒ-(R⁴)ₘ-[Si(R²)₂O-]ₙ-(CH₂-CHR³-O-)ₚ-CH₂-CHR³-OH

wherein
- R², m and n: are as defined above,
- R³: represents hydrogen or an alkyl group having 1 to 12 carbon atoms, preferably hydrogen or methyl,
- R⁴: represents an optionally inertly substituted, divalent hydrocarbon radical, preferably an alkylene radical (such as methylene, ethylene, propylene or butylene),
- X': represents a linkage between an R⁴ group and a Si atom, e.g., a covalent bond, -O- or -COO-,
- o: is an integer from 1 to 200, preferably 2 to 50 and more preferably 4 to 25 and
- p: is an integer from 0 to 200, preferably 2 to 50 and more preferably 4 to 25.

These siloxane compounds are prepared by reacting the appropriate siloxane with an amount of an alkylene oxide (preferably ethylene or propylene oxide) sufficient to prepare a compound having the desired siloxane content.

Other suitable siloxane-containing compounds may be linear, branched or cyclic and have a molecular weight (number average molecular weight as determined by gel permeation chromatography using polystyrene as standard) of up to 50,000, preferably up to 10,000, more preferably up to 6000 and most preferably up to 2000. These compounds generally have OH numbers of greater than 5, preferably greater than 25 and more preferably greater than 35. Compounds of this type are disclosed in "Silicon Compounds", 5th Edition, which is available from Hüls America, Inc.

To prepare the polyisocyanates mixtures according to the invention the minimum ratio of siloxane-containing compounds to polyisocyanate adduct is about 0.01 millimoles, preferably about 0.1 millimoles and more preferably about 1 millimole of siloxane-containing compounds for each mole of polyisocyanates adduct. The maximum amount of siloxane-containing compounds to polyisocyanate adduct is about 500 millimoles, preferably about 100 millimoles and more preferably about 20 millimoles of siloxane-containing compounds for each mole of polyisocyanate adduct. The amount of siloxane is selected such that the resulting polyisocyanate mixture contains a minimum of 0.002% by weight, preferably 0.02% by weight and more preferably 0.2% by weight, of siloxane groups (calculated as SiO, MW 44), based on solids, and a maximum of 50% by weight, preferably 10% by weight, more preferably 7% by weight and most preferably 3% by weight of siloxane groups, based on solids.

Suitable methods for preparing the polyisocyanate mixtures containing urethane groups are known. The urethanization reaction may be conducted at a temperature of 40 to 140°C, preferably 60 to 90°C and more preferably 70 to 80°C, in the presence of a known urethane catalyst, such as an organometallic salt or a tertiary amine. The reaction may be terminated by reducing the reaction temperature, by removing the catalyst, e.g., by applying a vacuum, or by the addition of a catalyst poison. After the reaction is terminated, there is no need to remove unreacted monomeric diisocyanates, e.g., by thin film evaporation, because polyisocyanate adducts having low monomeric diisocyanate contents are used as the starting material.

The urethanization reaction may be carried out in the absence or in the presence of solvents which are inert to isocyanate groups, preferably in the presence of solvents because the starting materials at 100% solids are either solid or have a high viscosity. Depending on the area of application of the products according to the invention, low to medium-boiling solvents or high-boiling solvents can be used. Suitable solvents include esters such as ethyl acetate or butyl acetate; ketones such as acetone or butanone; aromatic compounds such as toluene or xylene; halogenated hydrocarbons such as methylene chloride and trichloroethylene; ethers such as diisopropylether; and alkanes such as cyclohexane, petroleum ether or ligroin.

The process according to the invention may take place either batchwise or continuously, for example, as described below. The starting polyisocyanate adduct is introduced with the exclusion of moisture and optionally with an inert gas into a suitable stirred vessel or tube and optionally mixed with a solvent which is inert to isocyanate groups such as toluene, butyl acetate, diisopropylether or cyclohexane. The previously described compounds containing hydroxyl and siloxane groups may be introduced into the reaction vessel in accordance with several embodiments. They may be mixed with the polyisocyanate adducts and introduced into the reaction vessel; they may be separately added to the reaction vessel either before or after, preferably after, the polyisocyanate adducts are added; or the catalyst may be dissolved in these compounds prior to introducing the solution into the reaction vessel.

The progress of the reaction is followed by determining the NCO content by a suitable method such as titration, refractive index or IR analysis. Thus, the reaction may be terminated at the desired degree of urethanization, preferably at the theoretical NCO content.

The polyisocyanate mixtures obtained in accordance with the present invention have an average functionality of preferably about 3 to 6, more preferably 3 to 4; an NCO content of preferably 1 to 30% by weight, more preferably 1 to 25% by weight and most preferably 5 to 20% by weight; and a monomeric diisocyanate content of less than 3% by weight, preferably less than 2% by weight and more preferably less than 1% by weight. The polyisocyanate mixtures have a urethane group content (calculated as N,C,H,O₂, MW 59) of preferably at least 0.0005% by weight, more preferably at least 0.005% by weight and most preferably at least 0.3% by weight. The upper limit for the urethane group content is preferably 15% by weight, preferably 6% by weight and most preferably 3% by weight. The preceding percentages are based on the solids content of the polyisocyanate mixtures.

The products according to the present invention are polyisocyanate mixtures containing urethane groups and siloxane groups. The products may also contain a minor amount of allophanate groups depending upon the temperature maintained during the urethanization reaction and the degree of isocyanate group consumption. The urethane group content is more than 50%, more preferably more than 70% and most preferably more than 90%, based on the total equivalents of urethane and allophanate groups. Preferably, the polyisocyanate mixtures remain stable and homogeneous in storage for 1 month at 25°C, more preferably for 3 months at 25°C.

The products according to the invention are valuable starting materials for the production of polyisocyanate polyaddition products by reaction with compounds containing at least two isocyanate reactive groups. The products according to the invention may also be moisture-cured to form coatings. Preferred products are one or two-component coating compositions, more preferably polyurethane coating compositions. When the polyisocyanates are unblocked, two-component compositions are obtained. To the contrary when the polyisocyanates are blocked, one-component compositions are obtained.

Prior to their use in coating compositions, the polyisocyanate mixtures according to the invention may be blended with other known polyisocyanates, e.g., polyisocyanate adducts containing biuret, isocyanurate, urethane, urea, carbodiimide, and/or uretdione groups. The amount of the polyisocyanates mixtures according to the invention that must be blended with these other polyisocyanates is dependent upon the siloxane content of the polyisocyanate mixtures according to the invention, the intended application of the resulting coating compositions and the amount of low surface energy properties which are desired for this application.

To obtain low surface energy properties the resulting polyisocyanate blends should contain a minimum of 0.002% by weight, preferably 0.02% by weight and more preferably 0.2% by weight, of siloxane groups (MW 44), based on solids, and a maximum of 10% by weight, preferably 7% by weight and more preferably 3% by weight of siloxane groups (MW 44), based on solids. While siloxane group contents of greater that 10% by weight are also suitable for providing low surface energy coatings, there are no further improvements to be obtained by using higher quantities. By knowing the siloxane content of the polyisocyanate mixtures according to the invention and the desired siloxane content of the resulting polyisocyanate blends, the relative amounts of the polyisocyanate mixtures and the other polyisocyanates may be readily determined.

In accordance with the present invention any of the polyisocyanate mixtures according to the invention can be blended with other polyisocyanates, provided that the resulting blends have the minimum siloxane content required for the polyisocyanate mixtures of the present invention. However, the polyisocyanate mixtures to be blended preferably have a minimum siloxane content of 5% by weight, more preferably 10% by weight, and preferably have a maximum siloxane content of 50% by weight, more preferably 40% by weight and most preferably 30% by weight. These so-called "concentrates" may then be blended with other polyisocyanates to form polyisocyanate blends that may be used to prepare coatings having low surface energy characteristics.

Several advantages are obtained by preparing concentrates with high siloxane contents and subsequently blending them with non-siloxane-containing polyisocyanates. Initially, it is possible to convert many products to low surface energy polyisocyanates while only producing one concentrate. By forming such low surface energy polyisocyanates by blending commercially available polyisocyanates with concentrates, it is not necessary to separately prepare each of the products in both a siloxane-containing and a non-siloxane-containing form. One possible disadvantage of the highest siloxane contents is that all of the isocyanate groups of a small portion of the starting polyisocyanate adducts may be reacted. These molecules that do not contain isocyanate groups cannot react into the resulting coating and, thus, may adversely affect the properties of the final coating.

Preferred reaction partners for the products according to the invention are the polyhydroxy polyesters, polyhydroxy polyethers, polyhydroxy polyacrylates, polyhydroxy polylactones, polyhydroxy polyurethanes, polyhydroxy polyepoxides and optionally low molecular weight, polyhydric alcohols known from polyurethane coatings technology. Polyamines, particularly in blocked form, for example as polyketimines, oxazolidines or polyaldimines are also suitable reaction partners for the products according to the invention. Also suitable are polyaspartic acid derivatives (aspartates) containing secondary amino groups, which also function as reactive diluents.

To prepare the coating compositions the amount of the polyisocyanate component and the isocyanate reactive component are selected to provide equivalent ratios of isocyanate groups (whether present in blocked or unblocked form) to isocyanate-reactive groups of about 0.8 to 3, preferably about 0.9 to 1.5. The coating compositions may be cured either at ambient temperature or at elevated temperature.

To accelerate hardening, the coating compositions may contain known polyurethane catalysts, e.g., tertiary amines such as triethylamine, pyridine, methyl pyridine, benzyl dimethylamine, N,N-dimethylamino cyclohexane, N-methyl-piperidine, pentamethyl diethylene triamine, 1,4-diazabicyclo[2,2,2]-octane and N,N'-dimethyl piperazine; or metal salts such as iron(III)-chloride, zinc chloride, zinc-2-ethyl caproate, tin(II)-ethyl caproate, dibutyltin(IV)-dilaurate and molybdenum glycolate.

The products according to the invention are also valuable starting materials for one-component, moisture cure coating compositions or one-component coating compositions, preferably polyurethane coating compositions, in which the isocyanate groups are used in a form blocked by known blocking agents. The blocking reaction is carried out in known manner by reacting the isocyanate groups with suitable blocking agents, preferably at an elevated temperature (e.g. about 40 to 160°C), and optionally in the presence of a suitable catalyst, for example, the previously described tertiary amines or metal salts.

Suitable blocking agents include monophenols such as phenol, the cresols, the trimethylphenols and the tert. butyl phenols; tertiary alcohols such as tert. butanol, tert. amyl alcohol and dimethylphenyl carbinol; compounds which easily form enols such as acetoacetic ester, acetyl acetone and malonic acid derivatives, e.g. malonic acid diethylester; secondary aromatic amines such as N-methyl aniline, the N-methyl toluidines, N-phenyl toluidine and N-phenyl xylidine; imides such as succinimide; lactams such as ε-caprolactam and δ-valerolactam; pyrazoles such as 3,5-dimethyl pyrazole; oximes such as butanone oxime, methyl amyl ketoxime and cyclohexanone oxime; mercaptans such as methyl mercaptan, ethyl mercaptan, butyl mercaptan, 2-mercaptobenz-thiazole, α-naphthyl mercaptan and dodecyl mercaptan; and triazoles such as 1H-1,2,4-triazole.

The polyisocyanate mixtures according to the invention may also be used as the polyisocyanate component in two-component water borne coating compositions. To be useful in these compositions the polyisocyanate mixtures may be rendered hydrophilic either by blending with external emulsifiers or by a reaction with compounds containing cationic, anionic or non-ionic groups. The reaction with the hydrophilic compound may be carried out either before or after the urethanization reaction to incorporate the siloxane-containing compound. Methods for rendering the polyisocyanates hydrophilic are disclosed in copending application, U.S. Patents 5,194,487 and 5,200,489, the disclosures of which are herein incorporated by reference. The reduced surface tensions of the modified polyisocyanate mixtures enhance pigment dispersion and substrate wetting.

The coating compositions may also contain other additives such as pigments, dyes, fillers, levelling agents and solvents. The coating compositions may be applied to the substrate to be coated in solution or from the melt by conventional methods such as painting, rolling, pouring or spraying.

The coating compositions containing the polyisocyanate mixtures according to the invention provide coatings which have good dry times, adhere surprisingly well to a metallic base, and are particularly light-fast, color-stable in the presence of heat and very resistant to abrasion. They are also characterized by high hardness, elasticity, very good resistance to chemicals, high gloss, good weather resistance, good environmental etch resistance and good pigmenting qualities. Above all, the coating compositions have an excellent surface appearance and excellent cleanability.

The invention is further illustrated, but is not intended to be limited by the following examples in which all parts and percentages are by weight unless otherwise specified.

### EXAMPLES

### Siloxane Alcohol 0411

A butyl initiated, carbinol-terminated, polydimethylsiloxane alcohol having a molecular weight of about 1000 (available from Chisso Corp. as Silaplane FM-0411).

### Polyisocyanate 4470

An isocyanurate group-containing polyisocyanate prepared from isophorone diisocyanate, and having an isocyanate content of 11.9%, a content of monomeric diisocyanate of <0.50%, a viscosity at 25°C of 670 mPa.s and a surface tension of 40 dynes/cm as a 70% solution in n-butyl acetate (available from Bayer Material Science as Desmodur Z 4470 BA).

### Polyisocyanate 3300

An isocyanurate group-containing polyisocyanate prepared from 1,6-hexamethylene diisocyanate and having an isocyanate content of 21.6%, a content of monomeric diisocyanate of <0.30%, a viscosity at 25°C of 3000 mPa.s and a surface tension of 46 dynes/cm (available from Bayer Corporation as Desmodur N 3300).

### Polyester Polyol 670

A trifunctional polyester polyol supplied at 80% solids in n-butyl acetate and having an average equivalent weight of 500 and a viscosity of 2550 mPa.s @ 25°C (available from Bayer MaterialScience LLC as Desmophen 670A80).

### Surface tension of liquid samples

The Wilhelmy plate technique (flamed glass slides) was used to determine surface tension. Samples were analyzed with a Cahn DCA 312 dynamic contact angle analyzer. All samples were stirred prior to analysis.

### Surface energy of film samples

Advancing angles of water and methylene iodide, polar and nonpolar solvents respectively, were measured using a Rame-Hart goniometer. Total solid surface energies, including the polar and dispersive components, were calculated using the advancing angles according to the Owens Wendt procedure.

### Example 1 (Comparison) - Preparation of Polyisocyanate Mixture 1

148.5g (0.77 eq) of Polyisocyanate 3300 and 1.5g (0.0015 eq) of Siloxane Alcohol 0411 were charged to a 250 mL, 3-neck round bottom flask equipped with mechanical stirring, a cold water condenser; heating mantle, and N₂ inlet. The reaction mixture was stirred and heated to 80°C. After cooking for 5 hours at 80°C, the NCO content reached 21.56%, which is slightly higher than its theoretical value of 21.50%. The heat was removed and a cold water/ice bath was applied. The viscosity was 2739 cps @ 25°C. The surface energy of the liquid was 23.6 dynes per cm.

### Examples 2-6 - Preparation of Polyisocyanate Mixtures 2-6

Other polyisocyanate mixtures were prepared following the procedure of Example 1 using different polyisocyanate starting materials and different amounts of the siloxane alcohol. Isobutanol was used in a comparison example to show that the siloxane alcohol is necessary to provide low surface energy. Comparison Examples 5 and 6 use the same equivalents of alcohol as used in Examples 1 and 3. The details of Examples 1-6 are set forth in Table 1.

**TABLE 1**

| Example | 1 (comp) | 2 (comp) | 3 | 4 | 5 (comp) | 6 (comp) |
|---|---|---|---|---|---|---|
| Polyisocyanate | 3300 | 3300 | 4470 | 4470 | 3300 | 4470 |
| Siloxane Alcohol | 0411 | 0411 | 0411 | 0411 | i-Butanol | i-Butanol |
| Wt% -OH | 1 | 2 | 1 | 2 | 0.1 | 0.05 |
| Eq% -OH | 0.19 | 0.39 | 0.25 | 0.50 | 0.19 | 0.25 |
| % NCO | 22.56 | 21.21 | 12.00 | 12.08 | 21.54 | 12.10 |
| % SiO | 0.48 | 0.97 | 0.34 | 0.67 | 0.0 | 0.0 |
| Viscosity mPa.s @25 | 2739 | 2678 | 510 | 589 | 3000 | 1065 |
| Surface tension, dynes/cm | 24 | 24 | 27 | 26 | 47 | 32 |

### Examples 7-12 - Preparation of moisture cure coatings

Moisture cure coating compositions were prepared by diluting the polyisocyanate mixtures set forth in Table 2 with ethyl acetate and then adding 1 weight percent of dibutyl tin dilaurate, based on solids. Films made from the polyisocyanate mixtures according to the invention and the comparison polyisocyanate mixtures were drawn down on glass panels at 2-, 4-, and 6-mil wet film thicknesses. The films were cured over night on the laboratory benchtop under ambient conditions. The details of Examples 7-12 are set forth in Table 2.

**TABLE 2**

| Example | 7 (Comp) | 8 (Comp) | 9 | 10 | 11 (Comp) | 12 (Comp) |
|---|---|---|---|---|---|---|
| Polyisocyanate Mixture from Example | 1 | 2 | 3 | 4 | 5 | 6 |
| Polyisocyanate, g | 15.12 | 14.64 | 15.35 | 14.75 | 14.72 | 15.27 |
| Solvent, g | 1.68 | 1.63 | 0.81 | 0.78 | 1.64 | 0.80 |
| Catalyst, g | 0.15 | 0.15 | 0.15 | 0.15 | 0.15 | 0.15 |
| Surface energy, dynes/cm, for 2-mil film | 21 | 22 | 35 | 32 | 42 | 39 |
| Film clarity for 2-mil film | cloudy | cloudy | clear | clear | clear | clear |
| Surface energy, dynes/cm, for 4-mil film | 22 | 20 | 30 | 31 | 41 | 40 |
| Film clarity for 4-mil film | cloudy | cloudy | clear | clear | clear | clear |
| Surface energy, dynes/cm, for 6-mil film | 25 | 20 | 34 | 29 | 42 | 39 |
| Film clarity for 6-mil film | cloudy | cloudy | clear | clear | clear | clear |

These examples demonstrate that it is possible to prepare clear coatings from moisture-cure coating compositions containing the polyisocyanate mixtures according to the invention, which contain urethane groups as opposed to allophanate groups, provided that the polyisocyanate mixtures are based on polyisocyanate adducts that contain isocyanurate groups and are prepared from monomeric diiosocyanates having at least one cycloaliphatic group. The coatings prepared from the comparison polyisocyanates, which were prepared from a polyisocyanate adduct that did not satisfy the requirements of the present invention, was cloudy.

### Examples 13-14 - Preparation of Two-Component Coating Compositions

Two-component coating compositions were prepared by mixing the polyisocyanate mixtures from Examples 1 and 3 with Polyester Polyol 670 at an NCO:OH equivalent ratio of 1.05:1.00 and adding 0.05 g of dibutyl tin dilaurate per hundred parts of polyisocyanate/polyol blend. A 4 mil drawdown bar was used to draw coatings on glass panels. The coatings were cured overnight on the laboratory bench top under ambient conditions. The details of Examples 13-14 are set forth in Table 3.

**TABLE 3**

| Example | 13 (comp) | 14 |
|---|---|---|
| Polyisocyanate from example | 1 | 3 |
| % SiO of Polyisocyanate | 0.48 | 0.34 |
| Polyisocyanate, g | 2.1 | 2.6 |
| Polyester Polyol 670, g | 5.5 | 3.8 |
| Catalyst, g | 0.01 | 0.01 |
| Surface energy, dynes/cm | 13 | 31 |
| Film clarity | cloudy | clear |

These examples demonstrate that it is possible to prepare clear coatings from two-component coating compositions containing the polyisocyanate mixtures according to the invention, which contain urethane groups as opposed to allophanate groups, provided that the polyisocyanate mixtures are based on polyisocyanate adducts containing isocyanurate groups and prepared from monomeric diisocyanates having at least one cycloaliphatic group. The coating prepared from the comparison polyisocyanate, which was prepared from a polyisocyanate adduct that did not satisfy the requirements of the present invention, was cloudy.

### Example 15-16 Use of Polyisocyanate Mixtures 2 and 4 as Concentrates

1 g of the polyisocyanate mixtures from Examples 2 and 4 were mixed by hand with 9 g of the unmodified polyisocyanates set forth in Table 4. The resulting polyisocyanate mixtures possessed low surface tension values, which demonstrate that the polyisocyanate mixtures according to the invention could be used as concentrates for diluting unmodified polyisocyanates. The details are set forth in Table 4.

**TABLE 4**

| Example | 15 (comp) | 16 |
|---|---|---|
| Polyisocyanate Mixture from Example | 2 | 4 |
| Polyisocyanate Mixture, g | 1 | 1 |
| Unmodified Polyisocyanate | 3300 | 4470 |
| Weight, g | 9 | 9 |
| % SiO of Blend | 0.1 | 0.07 |
| Surface tension, dynes/cm | 29 | 27 |

These examples demonstrate that the polyisocyanate mixtures according to the invention can be diluted with unmodified polyisocyanates, which did not contain siloxane groups, and still provide low surface tension.

### Examples 17-18 - Preparation of moisture cure coatings

Moisture cure coatings were prepared by diluting the polyisocyanate mixtures from Examples 15 and 16 with ethyl acetate and then adding 1 weight percent of dibutyl tin dilaurate, based on solids. Films made from the polyisocyanate mixtures according to the invention were drawn down on glass panels at 4-mil wet film thickness. The coatings were cured overnight on the laboratory bench top under ambient conditions. The details of Examples 17-18 are set forth in Table 5.

**TABLE 4**

| Example | 17 (comp) | 18 |
|---|---|---|
| Polyisocyanate Mixture from Example | 15 | 16 |
| Polyisocyanate, g | 4.0 | 4.2 |
| Solvent, g | 0.45 | 0.46 |
| Catalyst, g | 0.04 | 0.04 |
| Surface energy, dynes/cm | 33 | 31 |
| Film clarity | cloudy | clear |

These examples demonstrate that it is possible to prepare clear coatings from moisture cure coating compositions containing the polyisocyanate mixtures according to the invention, which were prepared from concentrates and contain urethane groups as opposed to allophanate groups, provided that the polyisocyanate mixtures are based on polyisocyanate adducts containing isocyanurate groups and prepared from monomeric diisocyanates having at least one cycloaliphatic group. The coating prepared from the comparison polyisocyanate, which was prepared from a polyisocyanate adduct that did not satisfy the requirements of the present invention, was cloudy.

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

1. A polyisocyanate mixture
i) having a monomeric diisocyanate content of less than 3% by weight,
ii) having a urethane group content of more than 50 equivalent %, based on the total equivalents of urethane and allophanate groups, and
iii) containing siloxane groups (calculated as SiO, MW 44) in an amount of 0.002 to 50% by weight,
wherein the preceding percentages are based on the solids content of the polyisocyanate mixture and wherein the siloxane groups are incorporated by reacting
a) an isocyanate group from a polyisocyanate adduct containing isocyanurate groups and prepared from a monomeric diisocyanate having at least one cycloaliphatic group with
b) a compound containing one or more hydroxyl groups directly attached to a carbon atom and one or more siloxane groups
to form urethane groups.

2. The polyisocyanate mixture of Claim 1 wherein said compound contains one hydroxyl group directly attached to a carbon atom and one or more siloxane groups.

3. The polyisocyanate mixture of Claim 1 wherein said monomeric diisocyanate comprises isophorone diisocyanate.

4. The polyisocyanate mixture of Claim 2 wherein said monomeric diisocyanate comprises isophorone diisocyanate.

5. The polyisocyanate mixture of Claim 3 wherein said polyisocyanate mixture has a urethane group content of more than 90 equivalent %, based on the total equivalents of urethane and allophanate groups.

6. The polyisocyanate mixture of Claim 4 wherein said polyisocyanate mixture has urethane group content of more than 90 equivalent %, based on the total equivalents of urethane and allophanate groups.

7. The polyisocyanate mixture of Claim 1 wherein the polyisocyanate mixture contains 0.2 to 10% by weight, based on solids, of siloxane groups.

8. The polyisocyanate mixture of Claim 2 wherein the polyisocyanate mixture contains 0.2 to 10% by weight, based on solids, of siloxane groups.

9. The polyisocyanate mixture of Claim 3 wherein the polyisocyanate mixture contains 0.2 to 10% by weight, based on solids, of siloxane groups.

10. The polyisocyanate mixture of Claim 4 wherein the polyisocyanate mixture contains 0.2 to 10% by weight, based on solids, of siloxane groups.

11. The polyisocyanate mixture of Claim 5 wherein the polyisocyanate mixture contains 0.2 to 10% by weight, based on solids, of siloxane groups.

12. The polyisocyanate mixture of Claim 6 wherein the polyisocyanate mixture contains 0.2 to 10% by weight, based on solids, of siloxane groups.

13. The polyisocyanate mixture of Claim 1 wherein the polyisocyanate mixture contains 10 to 40% by weight, based on solids, of siloxane groups.

14. The polyisocyanate mixture of Claim 2 wherein the polyisocyanate mixture contains 10 to 40% by weight, based on solids, of siloxane groups.

15. The polyisocyanate mixture of Claim 3 wherein the polyisocyanate mixture contains 10 to 40% by weight, based on solids, of siloxane groups.

16. The polyisocyanate mixture of Claim 4 wherein the polyisocyanate mixture contains 10 to 40% by weight, based on solids, of siloxane groups.

17. The polyisocyanate mixture of Claim 5 wherein the polyisocyanate mixture contains 10 to 40% by weight, based on solids, of siloxane groups.

18. The polyisocyanate mixture of Claim 6 wherein the polyisocyanate mixture contains 10 to 40% by weight, based on solids, of siloxane groups.

19. A one- or two-component coating composition containing the polyisocyanate mixture of Claim 1, optionally blocked by blocking agents for isocyanate groups, and optionally a compound containing isocyanate-reactive groups.

## Patentansprüche

1. Polyisocyanatgemisch, das
i) einen Gehalt an monomerem Diisocyanat von weniger als 3 Gew.-% aufweist,
ii) einen Urethangruppengehalt von mehr als 50 Äquiv.-%, bezogen auf die gesamten Äquivalente an Urethan- und Allophanatgruppen, aufweist und
iii) Siloxangruppen in einer Menge von 0,002 bis 50 Gew.-% (berechnet als SiO, MG 44) enthält,
worin die obigen Prozentsätze auf dem Feststoffgehalt des Polyisocyanatgemischs basieren und worin die Siloxangruppen eingebaut sind, indem
a) eine Isocyanatgruppe eines Polyisocyanataddukts, das Isocyanuratgruppen enthält und aus einem monomeren Diisocyanat mit zumindest einer cycloaliphatischen Gruppe hergestellt ist, mit
b) einer Verbindung, die eine oder mehrere direkt an ein Kohlenstoffatom gebundene Hydroxylgruppen und eine oder mehrere Siloxangruppen enthält, umgesetzt wurde, um Urethangruppen zu bilden.

2. Polyisocyanatgemisch nach Anspruch 1, worin die Verbindung eine direkt an ein Kohlenstoffatom gebundene Hydroxylgruppe und eine oder mehrere Siloxangruppen enthält.

3. Polyisocyanatgemisch nach Anspruch 1, worin das monomere Diisocyanat Isophorondiisocyanat umfasst.

4. Polyisocyanatgemisch nach Anspruch 2, worin das monomere Diisocyanat Isophorondiisocyanat umfasst:

5. Polyisocyanatgemisch nach Anspruch 3, worin das Polyisocyanatgemisch einen Urethangruppengehalt von mehr als 90 Äquiv.-%, bezogen auf die gesamten Äquivalente an Urethan- und Allophanatgruppen, aufweist.

6. Polyisocyanatgemisch nach Anspruch 4, worin das Polyisocyanatgemisch einen Urethangruppengehalt von mehr als 90 Äquiv.-%, bezogen auf die gesamten Äquivalente an Urethan- und Allophanatgruppen, aufweist.

7. Polyisocyanatgemisch nach Anspruch 1, worin das Polyisocyanatgemisch 0,2 bis 10 Gew.-%, bezogen auf die Feststoffe, an Siloxangruppen enthält.

8. Polyisocyanatgemisch nach Anspruch 2, worin das Polyisocyanatgemisch 0,2 bis 10 Gew.-%, bezogen auf die Feststoffe, an Siloxangruppen enthält.

9. Polyisocyanatgemisch nach Anspruch 3, worin das Polyisocyanatgemisch 0,2 bis 10 Gew.-%, bezogen auf die Feststoffe, an Siloxangruppen enthält.

10. Polyisocyanatgemisch nach Anspruch 4, worin das Polyisocyanatgemisch 0,2 bis 10 Gew.-%, bezogen auf die Feststoffe, an Siloxangruppen enthält.

11. Polyisocyanatgemisch nach Anspruch 5, worin das Polyisocyanatgemisch 0,2 bis 10 Gew.-%, bezogen auf die Feststoffe, an Siloxangruppen enthält.

12. Polyisocyanatgemisch nach Anspruch 6, worin das Polyisocyanatgemisch 0,2 bis 10 Gew.-%, bezogen auf die Feststoffe, an Siloxangruppen enthält.

13. Polyisocyanatgemisch nach Anspruch 1, worin das Polyisocyanatgemisch 10 bis 40 Gew.-%, bezogen auf die Feststoffe, an Siloxangruppen enthält.

14. Polyisocyanatgemisch nach Anspruch 2, worin das Polyisocyanatgemisch 10 bis 40 Gew.-%, bezogen auf die Feststoffe, an Siloxangruppen enthält.

15. Polyisocyanatgemisch nach Anspruch 3, worin das Polyisocyanatgemisch 10 bis 40 Gew.-%, bezogen auf die Feststoffe, an Siloxangruppen enthält.

16. Polyisocyanatgemisch nach Anspruch 4, worin das Polyisocyanatgemisch 10 bis 40 Gew.-%, bezogen auf die Feststoffe, an Siloxangruppen enthält.

17. Polyisocyanatgemisch nach Anspruch 5, worin das Polyisocyanatgemisch 10 bis 40 Gew.-%, bezogen auf die Feststoffe, an Siloxangruppen enthält.

18. Polyisocyanatgemisch nach Anspruch 6, worin das Polyisocyanatgemisch 10 bis 40 Gew.-%, bezogen auf die Feststoffe, an Siloxangruppen enthält.

19. Ein- oder Zweikomponenten-Beschichtungszusammensetzung, die ein Polyisocyanatgemisch nach Anspruch 1, das gegebenenfalls mit Blockiermitteln für Isocyanatgruppen blockiert ist, und gegebenenfalls eine isocyanatreaktive Gruppen enthaltende Verbindung enthält.

## Revendications

1. Mélange de polyisocyanates
i) présentant une teneur en diisocyanates monomères inférieure à 3 % en poids,
ii) présentant une teneur en groupes uréthane supérieure à 50 % équivalents, rapporté au total des équivalents des groupes uréthane et allophanate, et
iii) contenant des groupes siloxane (calculés comme SiO, MW 44) dans une quantité de 0,002 à 50 % en poids,
dans lequel les pourcentages précédents sont rapportés à la teneur en matières solides du mélange de polyisocyanates et dans lequel les groupes siloxane sont Incorporés en faisant réagir
a) un groupe isocyanate à partir d'un produit d'addition de polyisocyanate contenant des groupes isocyanurate et préparé à partir d'un diisocyanate monomère ayant au moins un groupe cycloaliphatique avec
b) un composé contenant un ou plusieurs groupes hydroxyle directement fixés à un atome de carbone et un ou plusieurs groupes siloxane
pour former des groupes uréthane.

2. Mélange de polyisocyanates selon la revendication 1, dans lequel ledit composé contient un groupe hydroxyle directement fixé à un atome de carbone et un ou plusieurs groupes siloxane.

3. Mélange de polyisocyanates selon la revendication 1, dans lequel ledit diisocyanate monomère comprend du diisocyanate d'isophorone.

4. Mélange de polyisocyanates selon la revendication 2, dans lequel ledit diisocyanate monomère comprend du diisocyanate d'isophorone.

5. Mélange de polyisocyanates selon la revendication 3, dans lequel ledit mélange de polyisocyanates présente une teneur en groupes uréthane supérieure à 90 % équivalents, rapportés au total des équivalents des groupes uréthane et allophanate.

6. Mélange de polyisocyanates selon la revendication 4, dans lequel ledit mélange de polyisocyanates présente une teneur en groupes uréthane supérieure à 90 % équivalents, rapporté au total des équivalents des groupes uréthane et allophanate.

7. Mélange de polyisocyanates selon la revendication 1, dans lequel le mélange de polyisocyanates contient de 0,2 à 10 % en poids, rapporté aux matières solides, de groupes siloxane.

8. Mélange de polyisocyanates selon la revendication 2, dans lequel le mélange de polyisocyanates contient de 0,2 à 10 % en poids, rapporté aux matières solides, de groupes siloxane.

9. Mélange de polyisocyanates selon la revendication 3, dans lequel le mélange de polyisocyanates contient de 0,2 à 10 % en poids, rapporté aux matières solides, de groupes siloxane.

10. Mélange de polyisocyanates selon la revendication 4, dans lequel le mélange de polyisocyanates contient de 0,2 à 10 % en poids, rapporté aux matières solides, de groupes siloxane.

11. Mélange de polyisocyanates selon la revendication 5, dans lequel le mélange de polyisocyanates contient de 0,2 à 10 % en poids, rapporté aux matières solides, de groupes siloxane.

12. Mélange de polyisocyanates selon la revendication 6, dans lequel le mélange de polyisocyanates contient de 0,2 à 10 % en poids, rapporté aux matières solides, de groupes siloxane.

13. Mélange de polyisocyanates selon la revendication 1, dans lequel le mélange de polyisocyanates contient de 10 à 40 % en poids, rapporté aux matières solides, de groupes siloxane.

14. Mélange de polyisocyanates selon la revendication 2, dans lequel le mélange de polyisocyanates contient de 10 à 40 % en poids, rapporté aux matières solides, de groupes siloxane.

15. Mélange de polyisocyanates selon la revendication 3, dans lequel le mélange de polyisocyanates contient de 10 à 40 % en poids, rapporté aux matières solides, de groupes siloxane.

16. Mélange de polyisocyanates selon la revendication 4, dans lequel le mélange de polyisocyanates contient de 10 à 40 % en poids, rapporté aux matières solides, de groupes siloxane.

17. Mélange de polyisocyanates selon la revendication 5, dans lequel le mélange de polyisocyanates contient de 10 à 40% en poids, rapporté aux matières solides, de groupes siloxane.

18. Mélange de polyisocyanates selon la revendication 6, dans lequel le mélange de polyisocyanates contient de 10 à 40 % en poids, rapporté aux matières solides, de groupes siloxane.

19. Composition de revêtement mono- ou bi-constituante contenant le mélange de polyisocyanates selon la revendication 1, facultativement bloqué par des agents bloquants pour les groupes isocyanates, et facultativement un composé contenant des groupes isocyanate-réactifs.
